# EUROPÄISCHE PATENTANMELDUNG

(11) **EP 0 618 062 A2**
(43) Veröffentlichungstag der Anmeldung: **05.10.1994**
(21) Anmeldenummer: 94102783.1
(22) Anmeldetag: 24.02.1994
(51) Int. Cl.: B29C 69/00, B29C 51/00, A47K 3/00

(54) **Sanitärgegenstand, wie Duschtasse oder Badewanne, sowie Verfahren und Vorrichtung zur Herstellung derselben**

(30) Priorität: 10.03.1993 DE 4307554
(71) Anmelder: MASCHINENFABRIK GEORG GEISS, D-96145 Sesslach (DE)
(72) Erfinder: Geiss, Manfred, Dipl.-Ing., D-96145 Sesslach (DE)
(74) Vertreter: Metzler, Jürgen, Dipl.-Ing.

(57) **Zusammenfassung**

Es handelt sich um einen Sanitärgegenstand aus Kunststoff in zweischaliger Bauweise, wie Duschtasse oder Badewanne, sowie um ein Verfahren und eine Vorrichtung zur Herstellung derselben. Hierbei besteht jede der Schalen (3, 4) vollständig aus einem Thermoplasten ohne irgendwelche Verstärkungseinlagen. Die beiden Thermoplastschalen (3, 4) sind ohne Verwendung eines Klebers mit Hilfe der unmittelbar nach der Verformung der beiden Schalen (3, 4) vorhandenen Restwärme miteinander verschweißt. Das Verfahren zeichnet sich dadurch aus, daß zwei Thermoplastzuschnitte (5, 6) gleichzeitig beheizt und nach dem Plastifizieren unter Vakuum zu Schalen (3, 4) verformt und sodann unter Preßdruck miteinander verschweißt werden. Die Vorrichtung (1) zur Durchführung des Verfahrens besitzt einen Distanzrahmen (13), der die beiden Zuschnitte (5, 6) während des Beheizens mit Abstand voneinander hält. Sämtliche Rahmenteile des Distanzrahmens (13) sind nach außen verschieb- bzw. verlagerbar. Die auf diese Weise gefertigten Formteile sowie etwaige Abfälle bei der Weiterbearbeitung sind vollständig recycelbar, so daß ein umweltschonender geschlossener Stoffkreislauf entsteht.

## Beschreibung

Die Erfindung betrifft einen Sanitärgegenstand, wie Duschtasse oder Badewanne, aus Kunststoff in zweischaliger Bauweise. Weiterhin betrifft die Erfindung ein Verfahren und eine Vorrichtung zur Herstellung der Duschtasse oder Badewanne.

Sanitärprodukte, wie Duschtassen oder Badewannen, aus metallischem Werkstoff mit aufgebrannter Emailschicht sind bekannt. Diese bekannten Sanitärprodukte weisen zwar große Festigkeit auf und halten so verhältnismäßig großen Belastungen stand, aufgrund des verwendeten Werkstoffs sind sie jedoch verhältnismäßig schwer, was den Versand und die Montage entsprechend verteuert. Auch kommt es bei derartigen Sanitärartikeln zu häufigem Abplatzen der Emailschicht, so daß die ungeschützte Oberfläche Korrosionsangriffen ausgesetzt ist. Weitere Nachteile sind die hohen Herstellkosten sowie die Tatsache, daß es aufgrund der hohen Wärmeleitfähigkeit des metallischen Grundmaterials zu einem schnellen Auskühlen des Wanneninhalts kommt.

Wesentliche Vorteile bringt deshalb die Verwendung von Kunststoff bei der Herstellung derartiger Sanitärgegenstände. Dabei werden die Duschtassen und Badewannen so hergestellt, daß eine Kunststoffschale aus einem Thermoplasten besteht, die durch aufgebrachtes Polyesterharz mit Glasfasern verstärkt wird, um die Belastungen aufnehmen zu können. Auf diese Weise wird den Formteilen Steifigkeit verliehen. Problematisch hierbei sind die nachträglich anfallenden Abfälle, wie Randstreifen, ausgeschnittene Butzen und Schrott. Das gleiche Problem stellt sich beim Verschrotten derartiger Sanitärteile, denn es ist immer problematisch, eine festhaftende Kombination von Thermoplasten und Duroplasten zu recyclen, d.h. einen geschlossenen Stoffkreislauf zu erreichen, so daß Alt- und Abfallstoffe wiederverwertet werden können. Wenn zu dieser Kombination Thermoplast - Duroplast noch Glasfasern treten, ist ein recyclen praktisch nicht mehr möglich und auch eine Hochtemperaturverbrennung sehr kritisch.

Die Aufgabe der Erfindung besteht deshalb darin, einen Sanitärgegenstand sowie ein Verfahren und eine Vorrichtung zu seiner Herstellung zu schaffen, mit dem es möglich ist, vollständig recycelbare Produkte zu erhalten, wobei sichergestellt sein soll, daß die Duschtasse oder Badewanne allen durch den Benutzer oder den Tassen- bzw. Wanneninhalt hervorgerufenen Belastungen standhält. Der Sanitärgegenstand soll leicht und damit kostengünstig auch in großen Serien herstellbar sein.

Zur Lösung dieser Aufgabe sind bei der Erfindung die im kennzeichnenden Teil des Anspruches 1 angegebenen Merkmale vorgesehen. In den dem Anspruch 1 folgenden Ansprüchen sind für die Aufgabenlösung vorteilhafte und förderliche Weiterbildungen beansprucht, insbesondere auch hinsichtlich des Verfahrens zur Herstellung des Sanitärgegenstandes sowie der Vorrichtung zur Durchführung des Verfahrens.

Der in Zweischalenbauweise ausgebildete Sanitärgegenstand, wie Duschtasse oder Badewanne, besteht in allen seinen Teilen aus einem thermoplastischen Kunststoff. D.h. jede Schale besteht vollständig aus einem Thermoplasten ohne irgendwelche Verstärkungseinlagen. Beide Thermoplastschalen sind ohne Verwendung eines Klebers oder sonstiger Zusätze mit Hilfe der unmittelbar nach der Verformung der beiden Schalen vorhandenen Restwärme miteinander verschweißt und bilden so eine Einheit. Dabei ist die Verschweißung der beiden Schalen zweckmäßigerweise nur an einzelnen Stellen erfolgt, während die beiden Schalen an anderen Stellen voneinander unter Bildung von Hohlräumen einen Abstand aufweisen. Auf diese Weise werden steife Hohlkörper erhalten, die ohne weitere Verstärkung bestimmungsgemäß verwendet werden können. Die auf diese Weise gefertigten Formteile sind sowohl als Ganzes rückmahlbar wie auch sämtliche bei der Weiter- und Fertigbearbeitung entstehenden Abschnitte, Butzen usw. vollständig recycelt werden können, so daß ein geschlossener Stoffkreislauf entsteht. Die Herstellung der Duschtasse oder Badewanne erfolgt im Twinsheetverfahren, wobei zur Bildung der beiden Schalen zwei Zuschnitte aus thermoplastischem Kunststoff in einem Arbeitsgang gleichzeitig beheizt und nach dem Plastifizieren unter Vakuum verformt werden und sodann unter Preßdruck miteinander verschweißt werden. Die Vorrichtung zur Durchführung des Verfahrens weist einen zwischen dem oberen und unteren Spannrahmen angeordneten Distanzrahmen auf, der die beiden Zuschnitte während des Beheizens und Plastifizierens in Abstand zueinander hält und dessen sämlichen Rahmenteile zum Entformen und Ausstoßen des Fertigteils nach außen verschiebbar bzw. verlagerbar sind. Der obere Spannrahmen ist mit Teleskopleisten ausgerüstet. Sämtliche Teile der Vorrichtung, wie Oberstempel, oberer und unterer Spannrahmen, und der Distanzrahmen sind in bezug auf den am Maschinentisch gelagerten Unterstempel in Vertikalrichtung verlagerbar. Mit der Vorrichtung läßt sich somit ohne Schwierigkeit und in einem Arbeitsgang eine vollständige Duschtasse bzw. Badewanne aus Kunststoff ohne irgendwelche Verstärkungseinlagen herstellen, die voll recycelbar sind.

Die Erfindung wird nun anhand eines Ausführungsbeispiels im Zusammenhang mit der Zeichnung näher erläutert. Es zeigen:
- Fig. 1: die Vorrichtung zur Herstellung einer Duschtasse aus zwei Thermoplastzuschnitten im geöffneten Zustand, schematisch dargestellt, und
- Fig. 2: die Vorrichtung im geschlossenen Zustand in vergrößerter Darstellung mit fertig geformter Duschtasse vor dem Auswerfen aus der Vorrichtung.

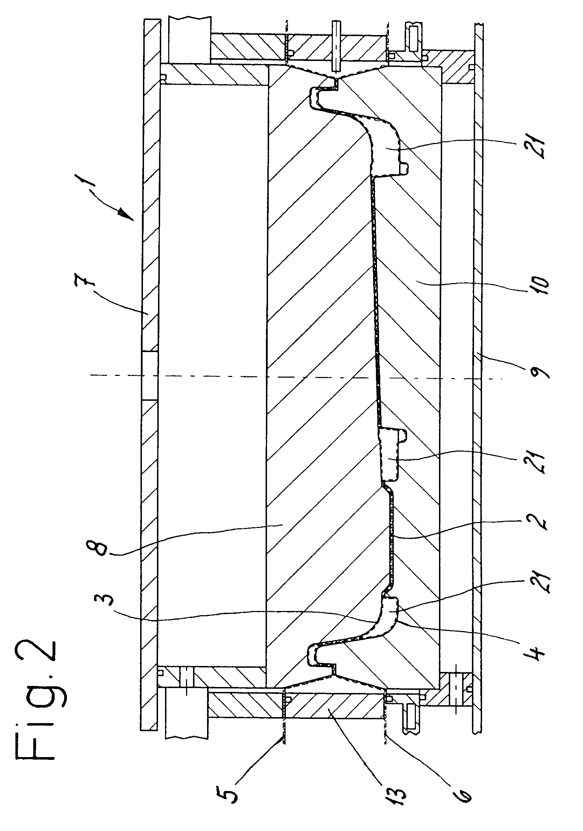

Die in Fig. 2 noch innerhalb der Formvorrichtung 1, einer Vakuumformmaschine, befindliche Duschtasse 2 besteht aus zwei Schalen 3 und 4 aus Thermoplast, die nach dem Verformen mit Hilfe der von der Verformung herrührenden Restwärme miteinander verschweißt sind.

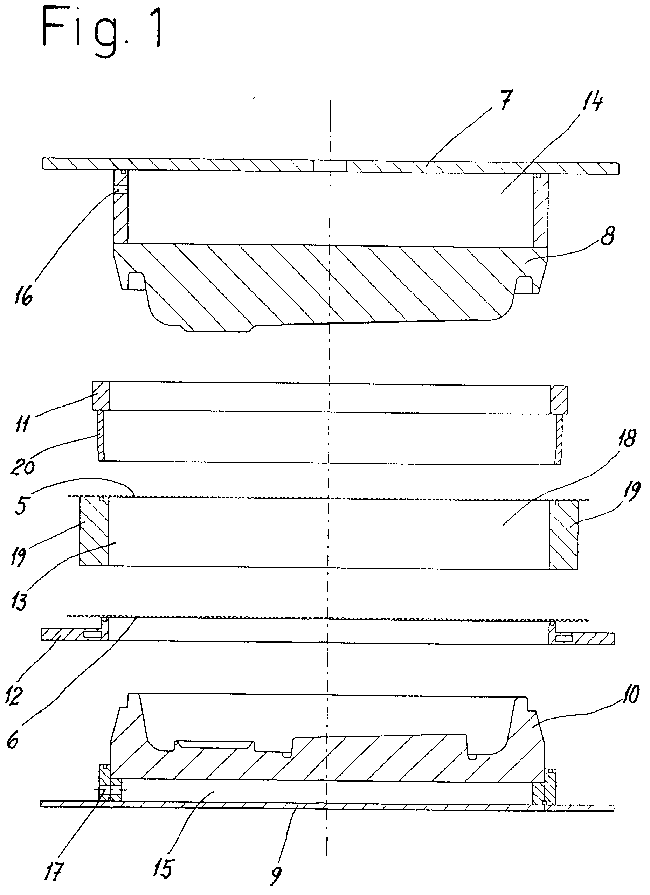

Wie in Fig. 1 deutlich zu erkennen ist, besteht das Ausgangsmaterial für die beiden Schalen 3, 4 der Duschtasse 2 aus entsprechend großen Zuschnitten 5 und 6 aus einem thermoplastischen Kunststoff in Plattenform, die nach dem Erwärmen und Plastifizieren unter Vakuum verformt werden. Wie Fig. 1 und 2 zeigen, besteht die Vorrichtung zum Verformen aus einem an der Oberstempelplatte 7 befestigten Oberstempel 8 und einem am Maschinentisch 9 abgestützten Unterstempel 10. Zwischen Oberstempel 8 und Unterstempel 10 sind der obere Spannrahmen 11, der als Fensterplatte ausgebildete untere Spannrahmen 12 und der dazwischenliegende Distanzrahmen 13 angeordnet. Sowohl der Oberstempel 8 wie auch die Spannrahmen 11 und 12 und der Distanzrahmen 13 sind in Höhenrichtung verfahrbar. Im in Fig. 1 gezeigten geöffneten Zustand der Vorrichtung ruht der Zuschnitt 5 auf dem Distanzrahmen und der Zuschnitt 6 auf dem unteren Spannrahmen 12. Sowohl im Bereich des Oberstempels 8 als auch im Bereich des Unterstempels 10 sind Hohlräume 14 und 15 mit Anschlußöffnungen 16 und 17 für Vakuumpumpen od. dgl. vorgesehen. Der Distanzrahmen 13 ist allseitig geschlossen und besteht aus jeweils in Längs- und Querrichtung verlaufenden Rahmenteilen 18 und 19, die in der Ebene des Distanzrahmens 13 nach außen verschieb- bzw. verlagerbar sind. Der obere Spannrahmen 11 weist Teleskopleisten 20 auf, die sich nach dem Zusammenfahren von Spannrahmen 11 und Distanzrahmen 13 ineinanderschieben.

Nach dem vertikalen Verfahren der beiden Spannrahmen 11 und 12 zum Distanzrahmen 13 hin sind die Zuschnitte 5 und 6 zwischen dem jeweiligen Spannrahmen 11, 12 und dem Distanzrahmen 13 eingespannt. Es werden nun die nicht weiter gezeigten Heizungen eingefahren und die beiden Zuschnitte 5 und 6 bis zur Plastifizierung erwärmt. Nach dem Ausfahren der Heizungen kommen die Stempel 8 und 10 jeweils zur Anlage am oberen Zuschnitt 5 bzw. unteren Zuschnitt 6 und die plastifizierten Zuschnitte 5 und 6 werden unter der Wirkung des Vakuums zur Anlage an den jeweiligen Formen des Ober- und Unterstempels 8, 10 gebracht. Sodann werden Ober- und Unterstempel 8, 10 mit Preßdruck aufeinander gefahren, so daß die zu den Schalen 3, 4 verformten Zuschnitte 5, 6 mit Hilfe der Restwärme miteinander verschweißt werden. Wie deutlich insbesondere in Fig. 2 zu erkennen ist, sind die untere und obere Form so aufeinander abgestimmt, daß die Verschweißung nicht über die gesamte Fläche der Schalen 3 und 4 erfolgt, sondern daß einzelne Stellen auch konstruktiv bedingt zueinander einen Abstand aufweisen, so daß Hohlräume 21 entstehen. Nach der fertigen Verformung unter Vakuum fahren die einzelnen Teile der Vorrichtung auseinander, die Rahmenteile 18, 19 des Distanzrahmens 13 werden nach außen verschoben bzw. verlagert, so daß das Fertigteil 2 entnommen werden kann bzw. aus der Vorrichtung ausgestoßen wird. Ein neuer Arbeitstakt kann nun eingeleitet werden. Am Fertigteil 2 ist nun nur noch der Spannrand abzutrennen sowie ggf. noch Säuberungsarbeiten durchzuführen. Die fertige Duschtasse 2 besteht vollständig aus thermoplastischem Kunststoff ohne irgendwelche Fremdstoffe und kann am Ende ihrer Gebrauchsdauer ohne Schwierigkeiten recycelt werden. Auch die bei der spanenden Fertigbearbeitung entstehenden Abfälle sind voll recycelbar, so daß ein Sanitärgegenstand hoher Umweltfreundlichkeit geschaffen ist und die Rohstoffresourcen entsprechend geschont werden.

## Patentansprüche

1. Sanitärgegenstand, wie Duschtasse oder Badewanne, aus Kunststoff in zweischaliger Bauweise, dadurch gekennzeichnet, daß jede Schale (3, 4) vollständig aus einem Thermoplasten ohne irgendwelche Verstärkungseinlagen besteht und beide Thermoplastschalen (3, 4) ohne Verwendung eines Klebers oder sonstiger Zusätze mit Hilfe der unmittelbar nach der Verformung der beiden Schalen (3, 4) vorhandenen Restwärme miteinander verschweißt sind.

2. Sanitärgegenstand nach Anspruch 1, dadurch gekennzeichnet, daß die beiden Thermoplastschalen (3, 4) jeweils an einzelnen Stellen lokal begrenzt miteinander verschweißt sind, während sie an anderen Stellen voneinander einen Abstand unter Bildung von Hohlräumen (21) aufweisen.

3. Verfahren zur Herstellung der Duschtasse oder Badewanne nach Anspruch 1 oder 2, dadurch gekennzeichnet, daß zur Bildung der beiden Schalen (3, 4) zwei Zuschnitte (5, 6) aus thermoplastischem Material in einem Arbeitsgang gleichzeitig beheizt und nach dem Plastifizieren unter Vakuum verformt werden und sodann unter Preßdruck miteinander verschweißt werden.

4. Vorrichtung zur Durchführung des Verfahrens nach Anspruch 3, bei der zwischen dem oberen und unteren Spannrahmen (11, 12) ein Distanzrahmen (13) zum Halten der beiden Zuschnitte (5, 6) mit Abstand voneinander während des Beheizens und Plastifizierens angeordnet ist, dadurch gekennzeichnet, daß sämtliche Rahmenteile (18, 19) des Distanzrahmens (13) nach außen verschiebbar bzw. verlagerbar sind.

5. Vorrichtung nach Anspruch 4, gekennzeichnet durch einen am Machinentisch (9) fest abgestützten Unterstempel (10) für die Verformung des unteren Thermoplast-Zuschnitts (6) und einem in Vertikalrichtung verlagerbaren Oberstempel (8) zur Verformung des oberen Thermoplast-Zuschnitts (5), wobei die in Vertikalrichtung verlagerbaren beiden Spannrahmen (11, 12) und der Distanzrahmen (13) zwischen Unter- und Oberstempel (8, 10) angeordnet sind.

6. Vorrichtung nach Anspruch 4 oder 5, dadurch gekennzeichnet, daß der oberer Spannrahmen (11) mit Teleskopleisten (20) ausgerüstet ist.
